# EUROPEAN PATENT APPLICATION

(11) **EP 2 692 640 A2**
(43) Date of publication of application: **05.02.2014**
(21) Application number: 13178616.2
(22) Date of filing: 30.07.2013
(51) Int. Cl.: B64D 15/12

(54) **Ice protection system**

(30) Priority: 31.07.2012 US 201261678050 P; 26.09.2012 US 201261706052 P
(71) Applicant: Goodrich Corporation, Charlotte, North Carolina 28217-4578 (US)
(72) Inventor: Carpino II, Richard Joseph, Canton, OH Ohio 44721 (US)
(74) Representative: Hull, James Edward

(57) **Abstract**

An ice protection system (20) comprising an electrothermal device (30) responsible for maintaining an aircraft surface (14) at an anti-ice temperature greater than 0°C. An optimum power input to the electrothermal device (30) is based on outside air temperature sensed by an OAT sensor (40) and on liquid water content detected by an LWC detector (50). The system (20) can be characterized by the absence of surface-temperatures sensors.

## Description

### BACKGROUND

An aircraft typically comprises one or more ice protection systems for its surfaces which are susceptible to icing during flight. In an electrothermal anti-icing system, an electrothermal device converts electrical power into heat to maintain the aircraft surface at a temperature above the freezing point of water. Traditionally, this has been accomplished by periodically or continuously measuring the temperature of the to-be-anti-iced surface and then regulating the electrothermal device accordingly.

### SUMMARY

An ice protection system is provided wherein an electrothermal device maintains a surface at a predetermined anti-icing temperature without sensing the surface's temperature. The system uses an outside air temperature sensed by an OAT sensor and a liquid water content detected by an LWC detector to determine an appropriate power input to the electrothermal device. The ice protection system can be preferably characterized by the absence of surface-temperature sensors on the to-be-anti-iced surface and/or by the absence of surface-temperature inputs in power-determining steps.

### DRAWINGS

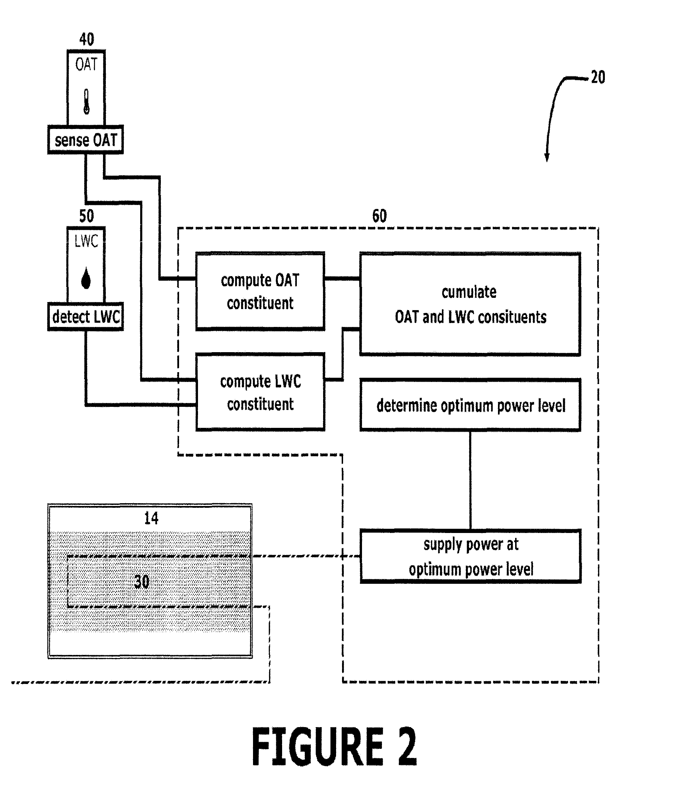

Figure 1 shows an aircraft having an ice protection system installed thereon and Figure 2 shows the ice protection system.
Figures 3-4 show plots of some possible constituent data;

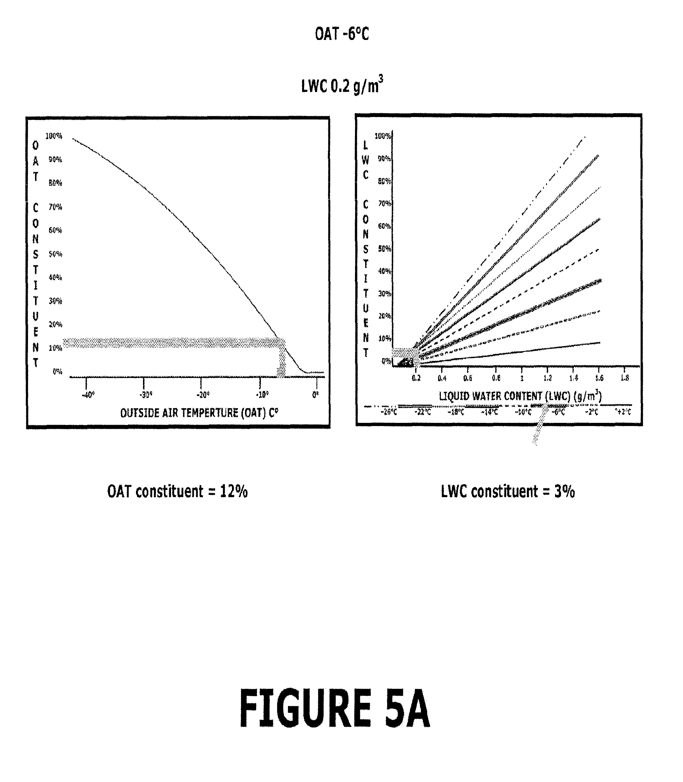

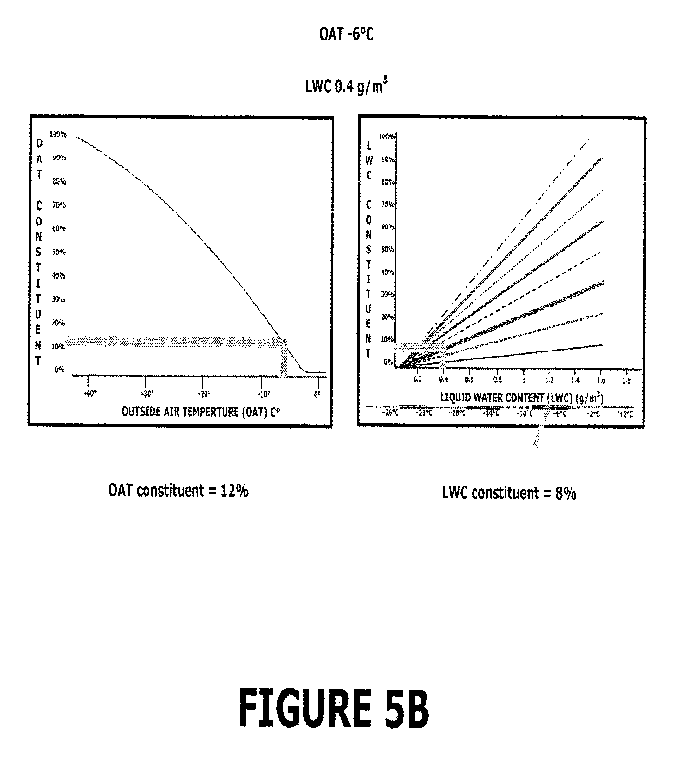

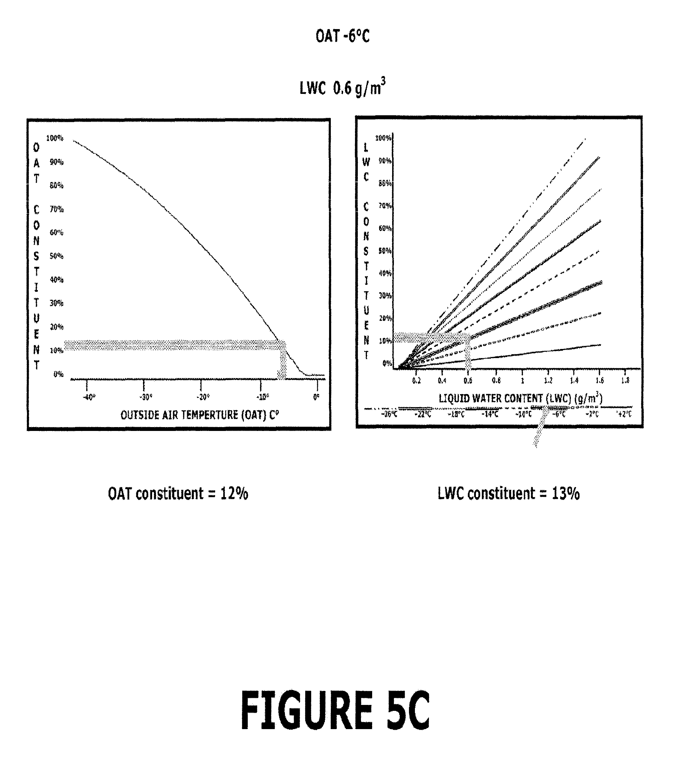

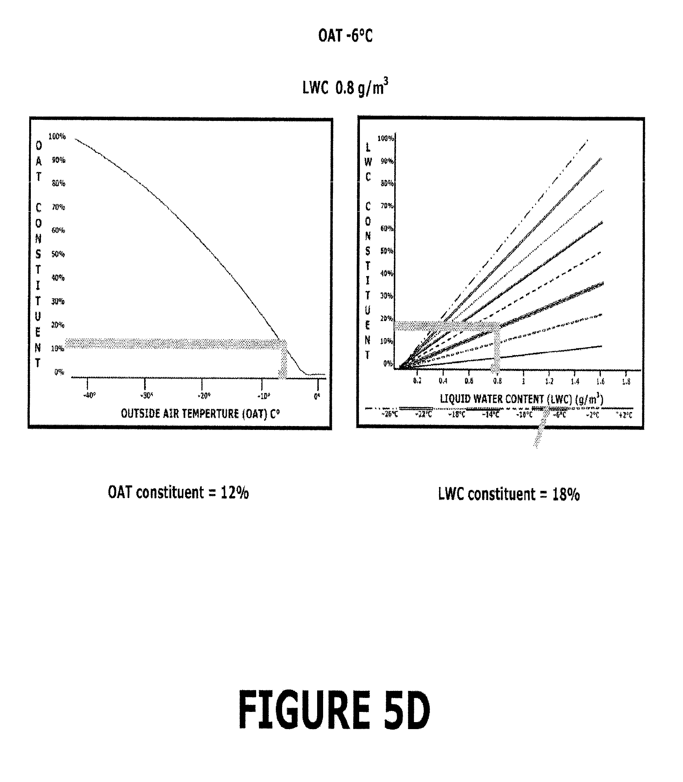

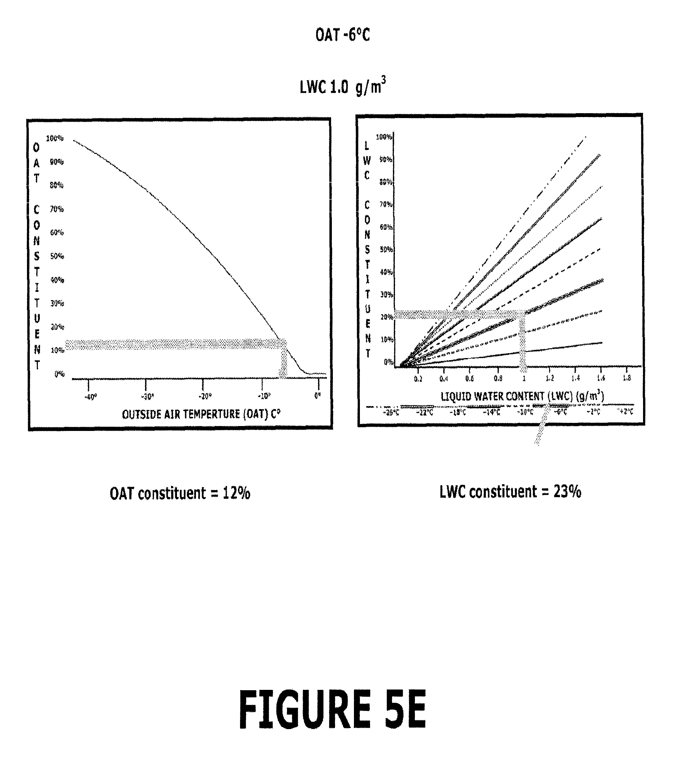

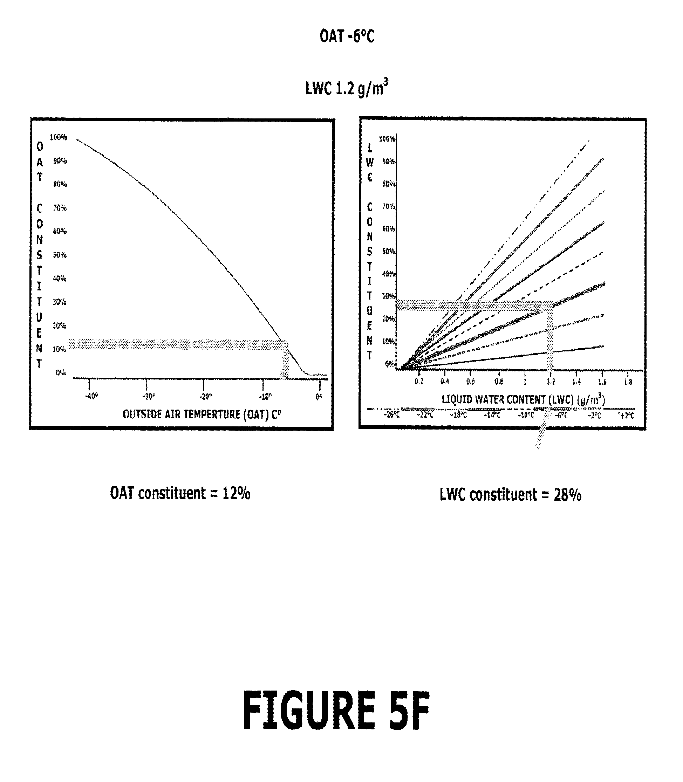

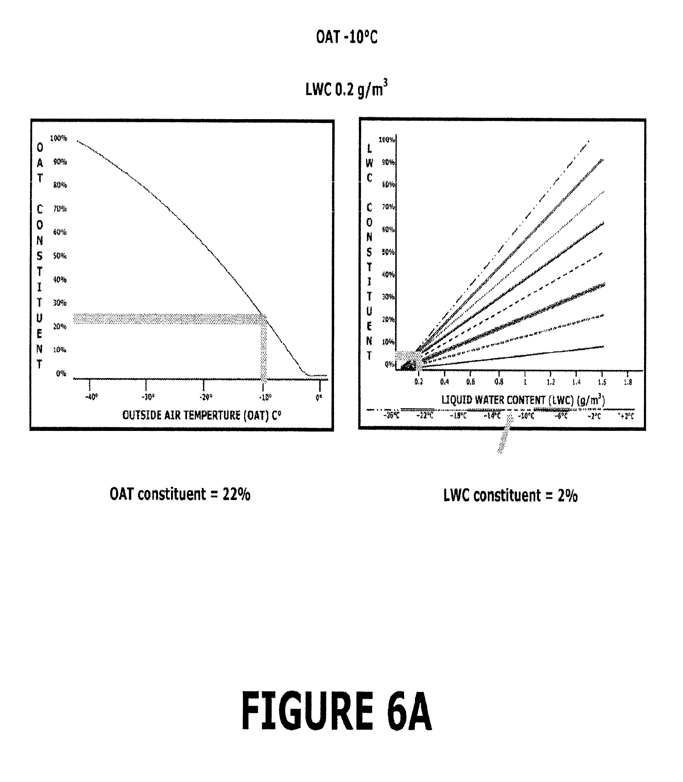

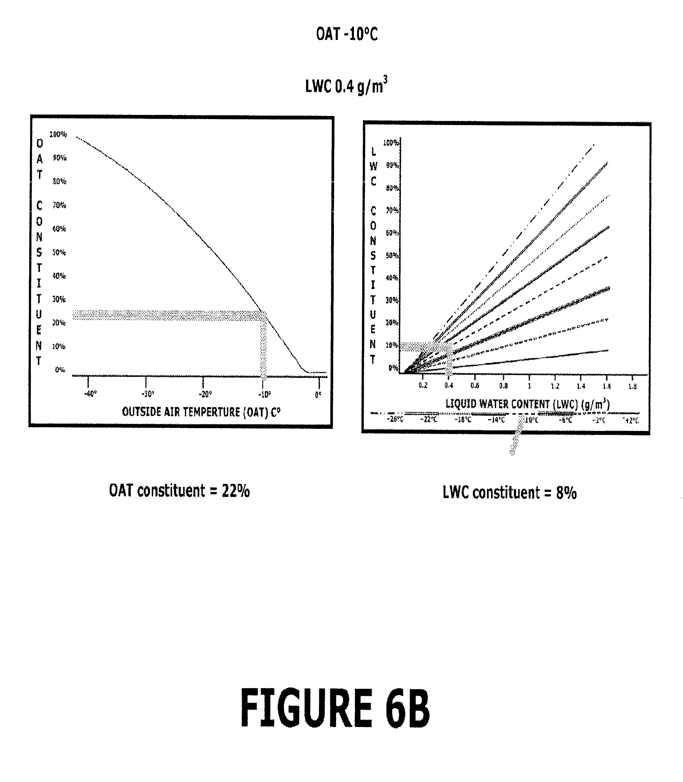

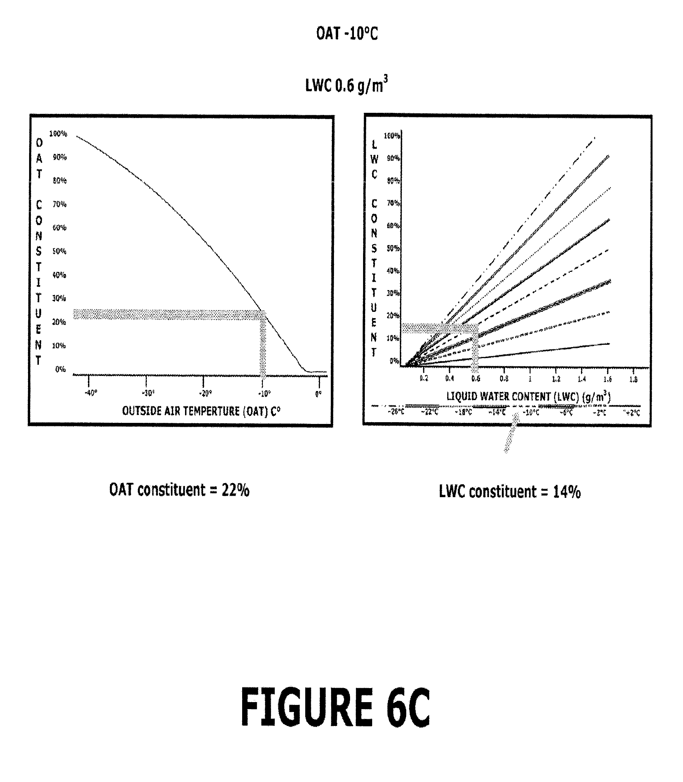

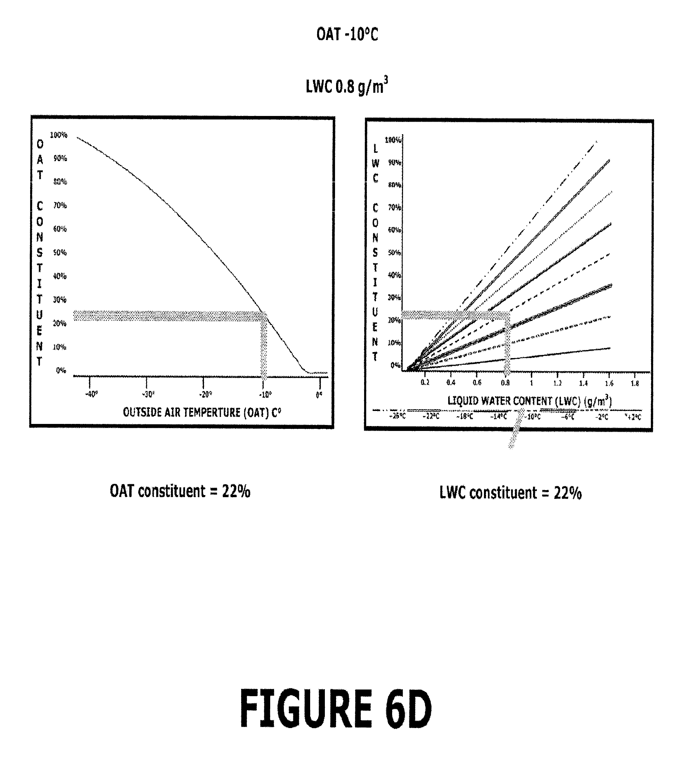

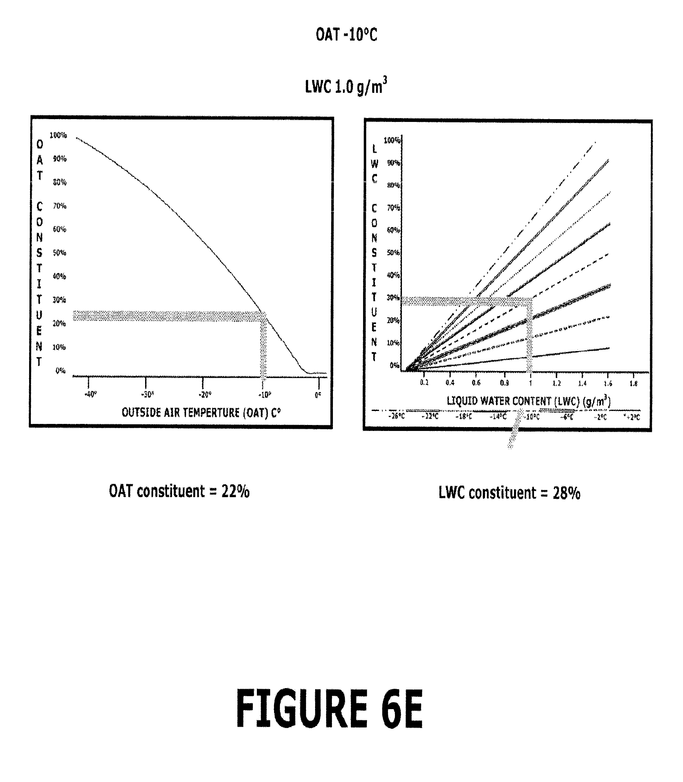

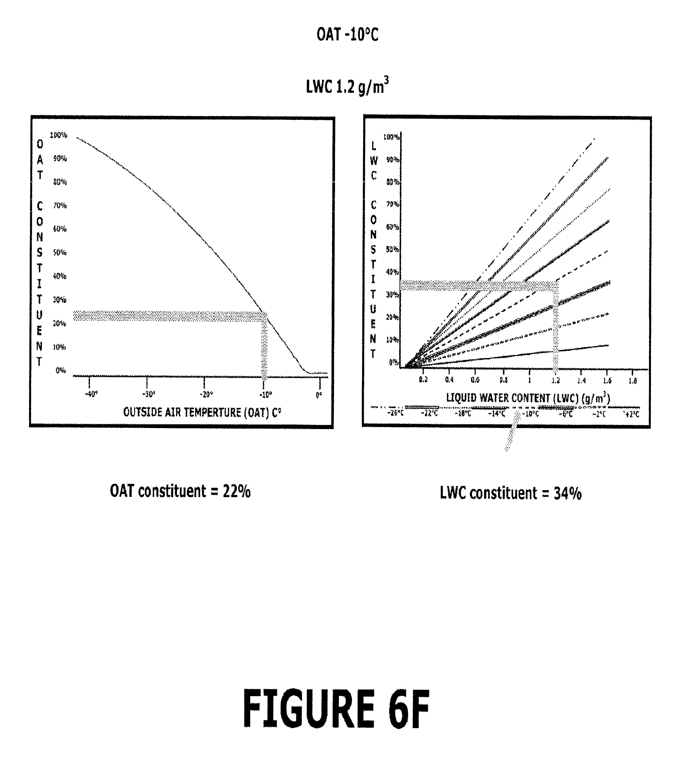

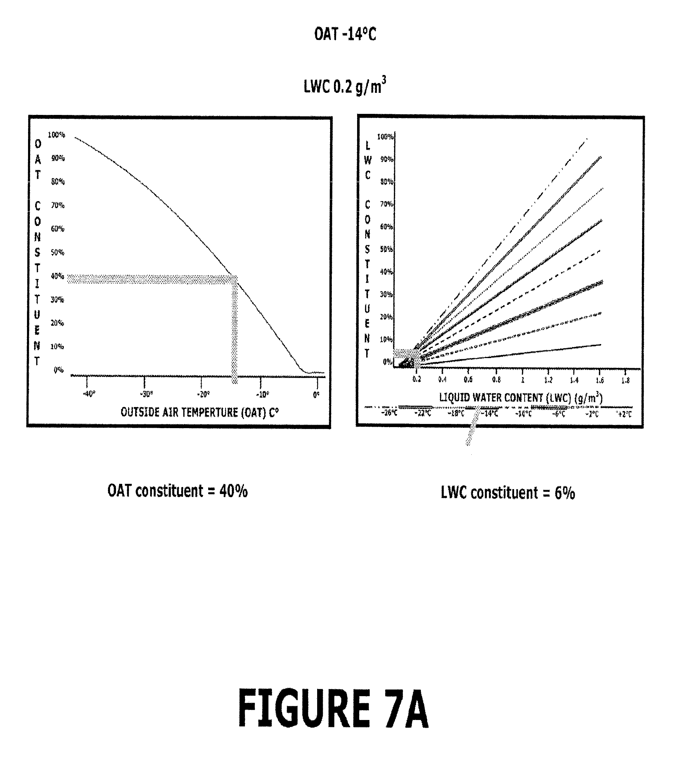

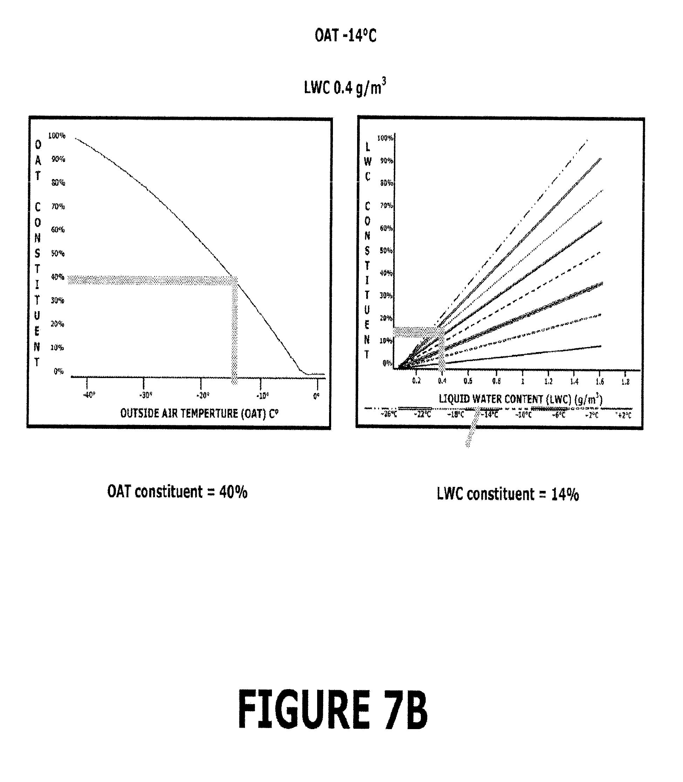

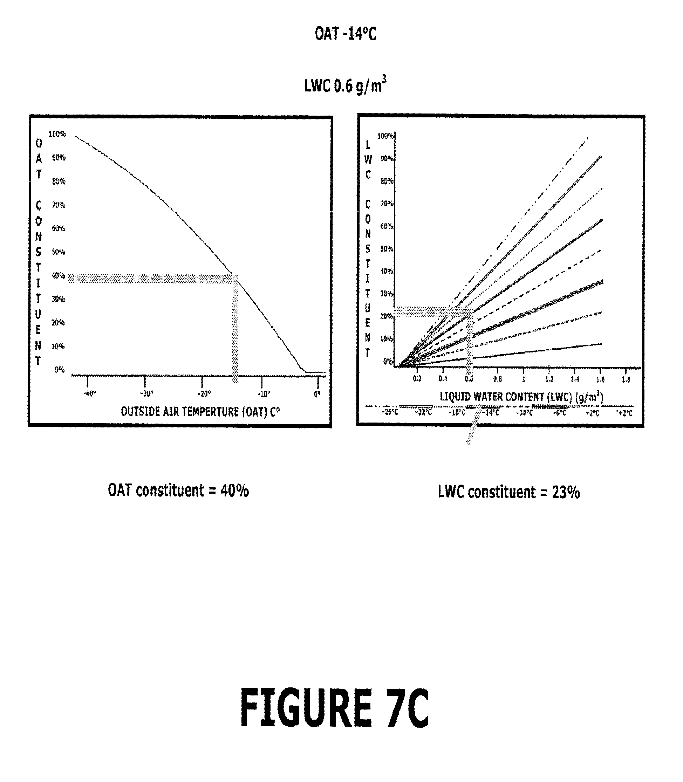

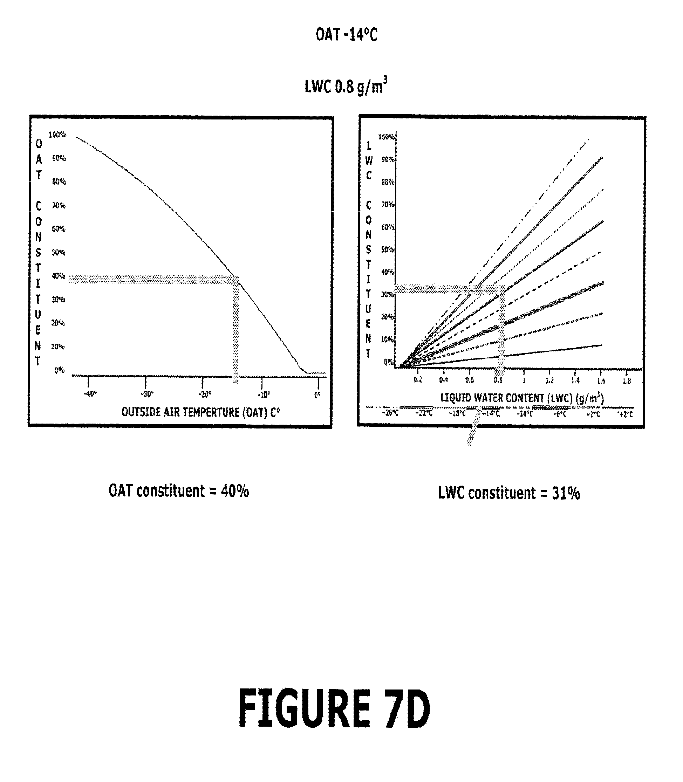

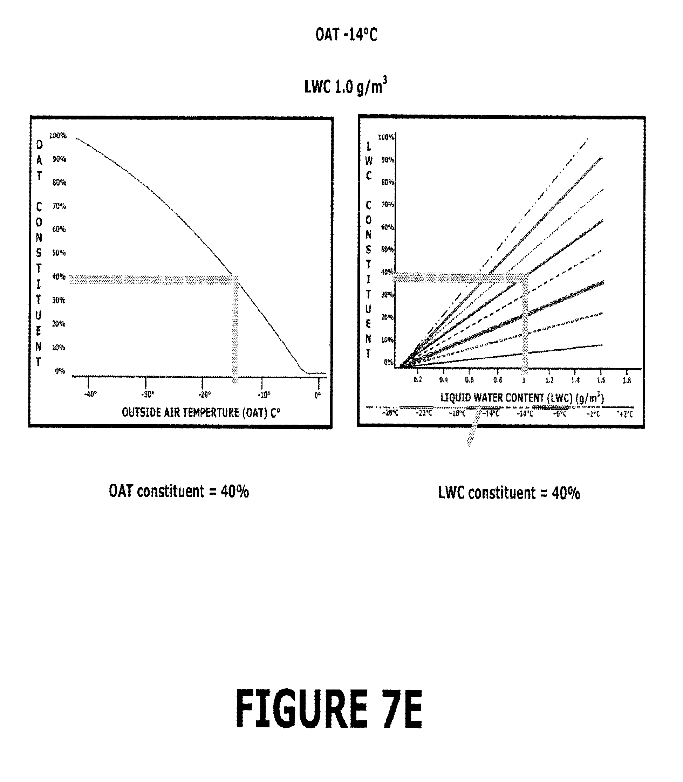

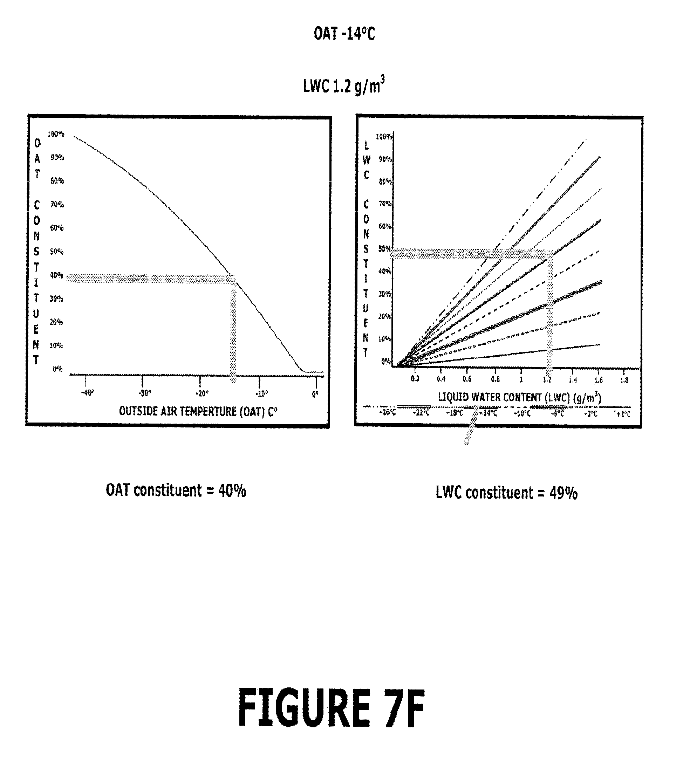

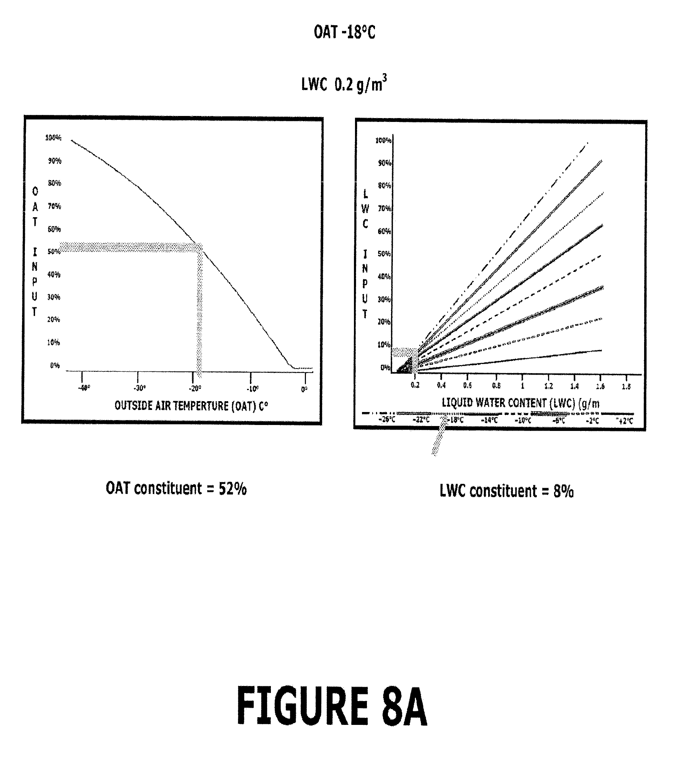

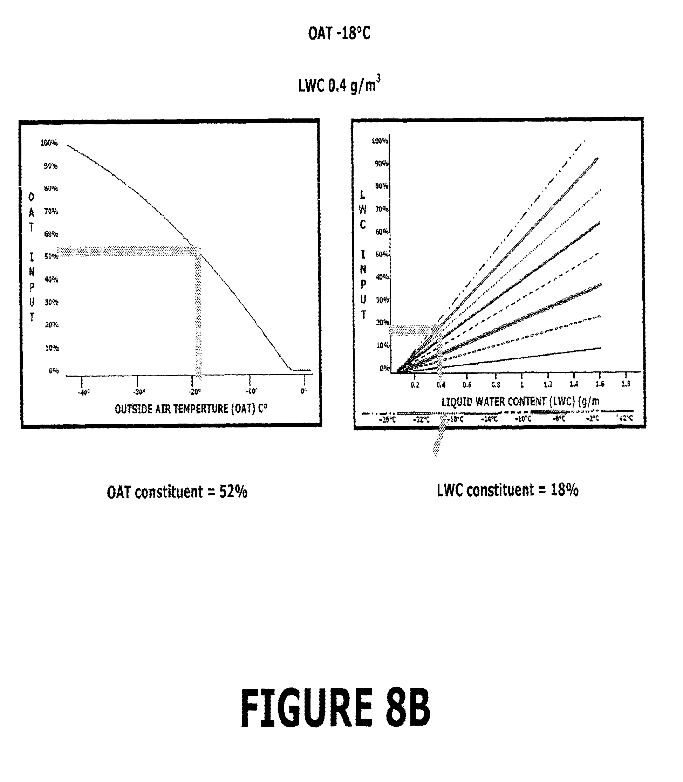

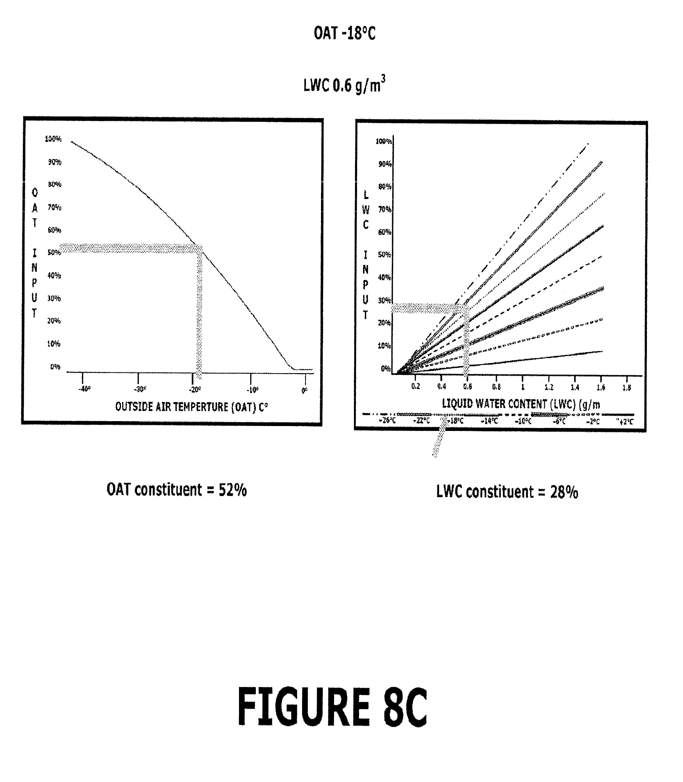

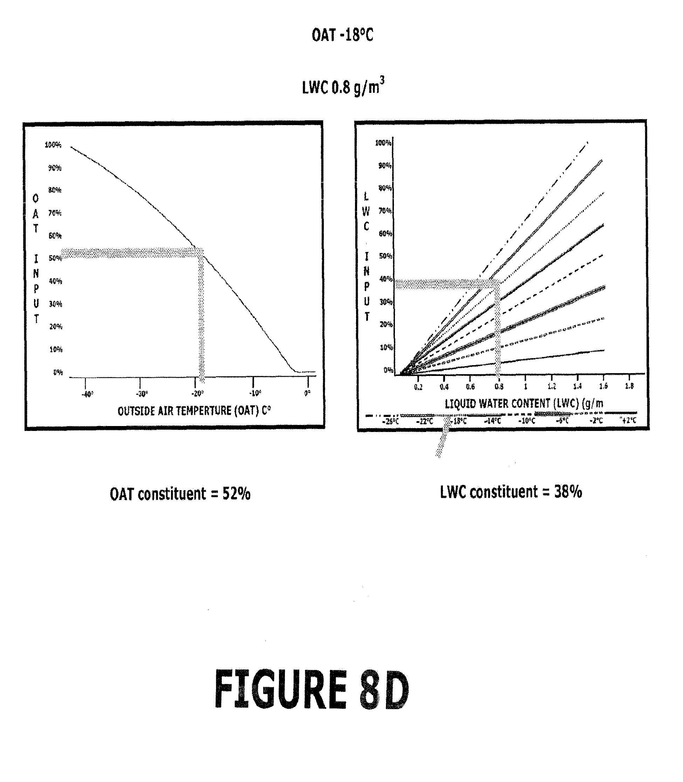

Figures 5A-5F, Figures 6A-6F, Figures 7A-7F, and Figures 8A-8D show constituent determinations from the constituent data; and
Figures 9-12 show compilations and comparisons of the determinations of Figures 5A-5F, Figures 6A-6F, Figures 7A-7F, and Figures 8A-8D.

### DESCRIPTION

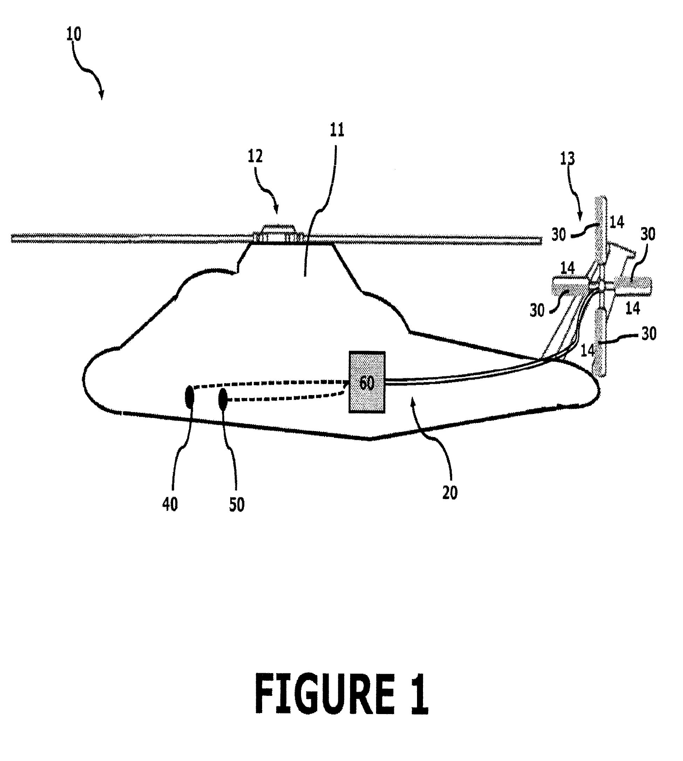

Referring now to the drawings, and initially to Figure 1, a rotary-wing aircraft 10 (e.g., a helicopter) is shown. The aircraft 10 can comprises a fuselage 11, a main rotor 12, and a tail rotor 13. When liquid water content is present, the blades 14 of the tail rotor 13 are intended to be consistently maintained at an anti-icing temperature during flight.

Anti-icing can be accomplished with two methods, commonly known as running-wet and evaporative. Running-wet anti-ice systems maintain the surface temperature warm enough to prevent ice from freezing. Impinging droplets that run back off the running-wet surface may refreeze if going to an unprotected or de-ice surface. For these systems, the anti-icing temperature can be greater than 0°C, greater than 2°C, and/or greater than 4°C.

Evaporative anti-ice systems maintain a surface temperature high enough to evaporate impinging droplets upon impact. This type of anti-ice system eliminates run back and refreeze on downstream surfaces. For evaporative systems, the anti-icing temperature can be greater than 80°C , greater than 90°C , and/or greater than 100°C.

The aircraft 10 comprises an ice protection system 20 for its tail rotor 13 including an electrothermal device 30 for each rotor blade 14. Each device 30 converts electrical power into heat and its heat output is proportional to its power input. The heat output is preferably optimized to maintain the corresponding rotor blade 14 at or just slightly above the anti-icing temperature. Electric power can be supplied to the rotor blades 14 simultaneously, sequentially, or in alternating pairs, depending upon power draw limitations and/or symmetry concerns.

Electric power can be selectively supplied to the electrothermal device 30 at a plurality of nonzero power levels. For example, power may be supplied in 50% power intervals (i.e., 50%, 100%) 20% power-level intervals (i.e., 20%, 40%, 60%, 80%, 100%), in 10% power-level intervals (i.e., 10%, 20%, 30%, 40%, 50%, 60%, 70%, 80%, 90%, 100%), or 5% power-level intervals (i.e., 5%, 10%, 15%, 20%, 25%, 30%, 35%, 40%, 45%, 50%, 55%, 60%, 65%, 70%, 75%, 80%, 85%, 90%, 95%, 100%).

The power levels can be accomplished by adjusting actual power supply levels, by pulsing or modulating a substantially constant supply level modulation, and/or by adjusting supply increments. With some level-changing techniques (e.g., pulsing and modulating) very small power-level intervals can be employed. Thus the ice protection system 20 having a multitude of power levels at very minuscule intervals is feasible and foreseeable.

The ice protection system 20 can comprise an OAT sensor 40 which senses outside air temperature and an LWC detector 50 which detects liquid water content. The OAT sensor 40 and the LWC detector 50 can be mounted on the exterior of the aircraft 10, such as somewhere on its fuselage 11. In the illustrated embodiment, for example, they are located remote from the rotor blades 14 and the electrothermal devices 30.

The ice protection system 20 can be preferably characterized by the absence of temperature sensors which directly sense the temperature of the surface 14. Additionally or alternatively, it can be preferably characterized by the absence of surface-temperature inputs during power determination steps.

Heater control has traditionally been accomplished in the aircraft industry by periodically or continuously measuring the temperature of the to-be-anti-iced surface and then regulating the electrothermal device accordingly. To this end, electrical surface-temperature sensors are embedded in the cured laminate forming the layers of the electrothermal device 30. Each electrical temperature sensor requires a lead line extending between it and a connection to an onboard power source.

The absence of such temperature sensors in the ice protection system 20 reduces heater component count, simplifies heater assembly, and/or removes the installation headaches which come with multiple lead lines.

The ice protection system 20 further comprises an optimizer 60 which determines an optimum power level and supplies power to the electrothermal device 30 at this optimum power level. Specifically, the optimizer 60 computes an OAT constituent and an LWC constituent and determines the optimum power level based at least on both these constituents.

The OAT constituent corresponds to the power required, at the sensed outside air temperature, for the electrothermal device 20 to maintain the surface 21 at the anti-ice temperature without the presence of impinging water (i.e., zero liquid water content). The OAT constituent can be based solely on the outside air temperature sensed by the sensor 50.

The LWC constituent corresponds to the additional power required for the electrothermal device 20 to maintain the anti-ice temperature at the detected liquid water content. The LWC constituent can be based both on the outside air temperature sensed by the sensor 50 and the liquid water content detected by the detector 60. Other factors, such as velocity, may also enter into the analysis with aircraft surfaces.

The OAT-constituent and the LWC-constituent data can be compiled and/or confirmed through thermal analysis, mathematical modeling, historical records, wind tunnel testing, flight testing, or other techniques for the relevant range of outside air temperatures (e.g., from about -40°C to about +2°C) and the relevant range of liquid water contents 9 (e.g., from about 0.05 g/m3 to about 3.0 g/m3).

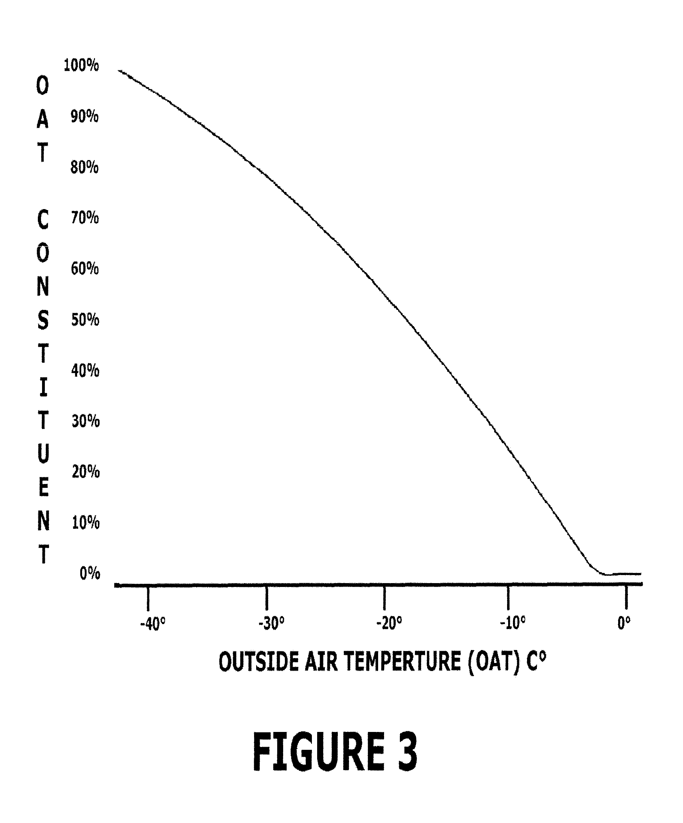

As shown in Figure 3, the OAT-constituent data can be (but need not be) graphed. In the illustrated embodiment, the outside air temperature is plotted against percentage of power and the data falls onto a substantially smooth curve which slopes downward as the temperature increases.

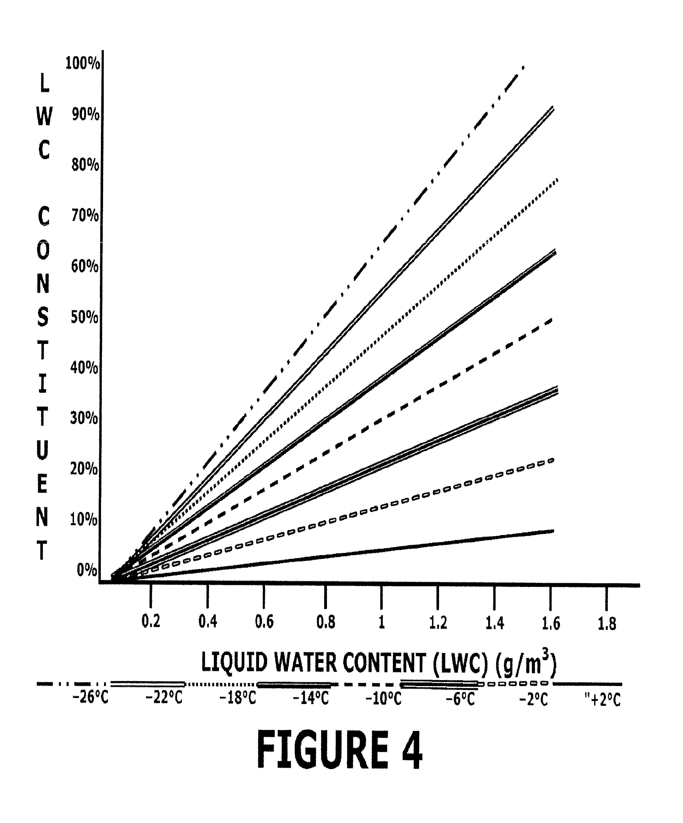

As shown in Figure 4, the LWC-constituent data can be (but need not be) graphed. In the illustrated embodiment, the liquid water content is plotted against percentage of power at a range of outside air temperatures. The data falls into a family of lines sloping upward as the liquid water content increases. The lines' slopes also increase as the outside air temperatures increases.

The determination of OAT and LWC constituents is depicted in the 5th- 8th set of drawings for a range of outside air temperatures (i.e., -6°C, -10°C, -14°C, -18°C) each across a progression of liquid water contents (.i.e., 0.2g/m3, 0.4g/m3, 0.6g/m3, 0.8g/m3, 1.0g/m3, 1.2g/m3).

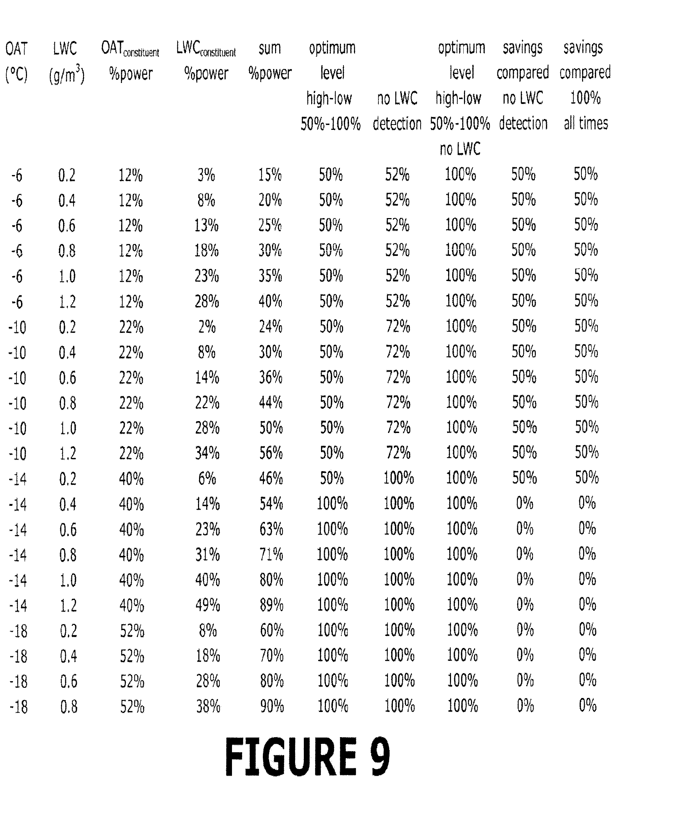

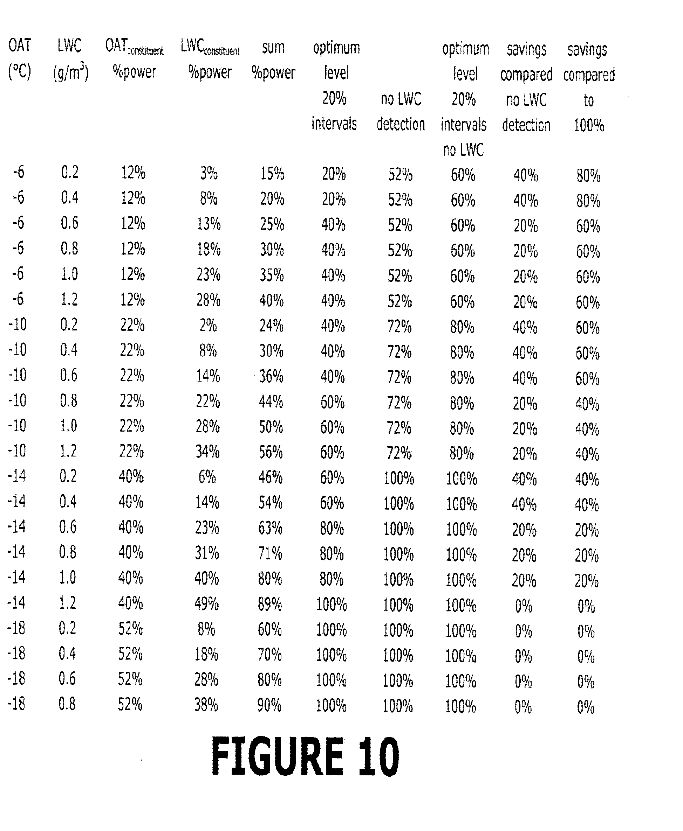

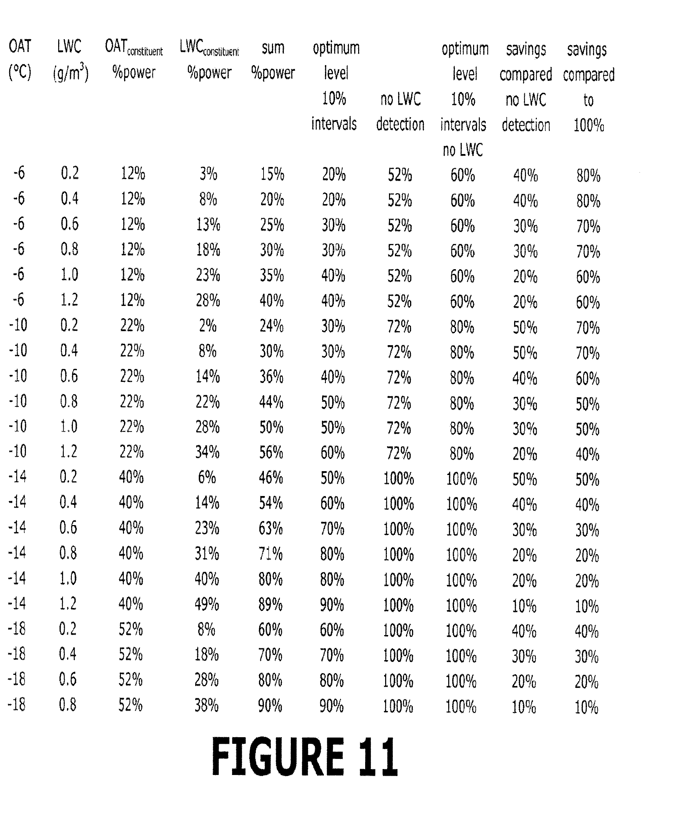

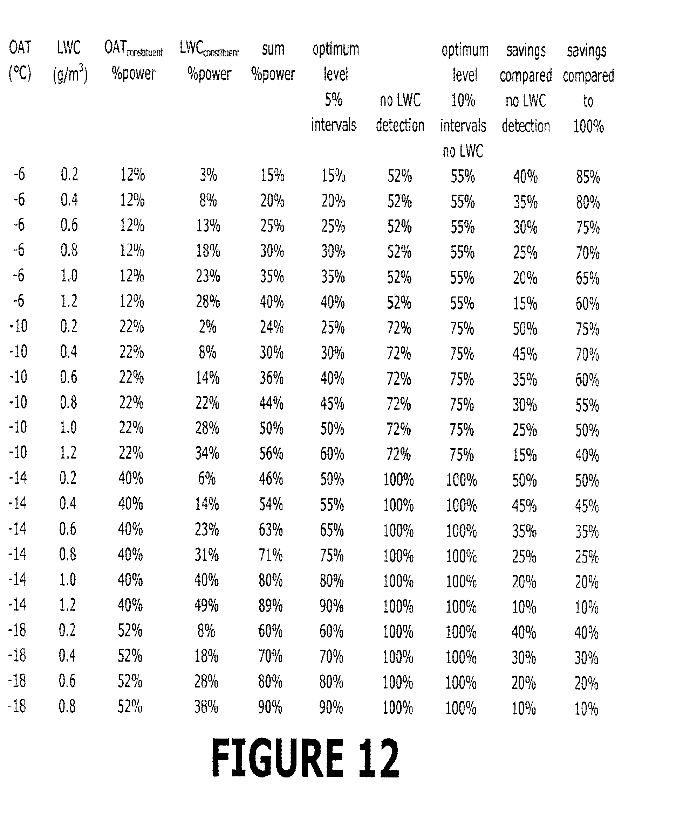

In Figures 9-12, the optimum power level is determined by rounding up to the nearest one of the available plurality of power levels. Savings are calculated by comparing this optimum power level to that which would have been determined without the LWC constituent. And savings are calculated by comparing this optimum power level to a convention system wherein the power level is 100% during any icing condition, regardless of severity. As is reflected in Figure 12 (showing 5% power intervals), more savings are realized the greater the selection of available power levels. However, as reflected in Figure 9, power savings can be accomplished even when using just two power levels, (i.e., high at 100% and low at 50%).

While the aircraft 10 and the ice protection system 20 have been shown and described with respect to certain embodiments, equivalent alterations and modifications will occur to others skilled in the art upon the reading and understanding of this disclosure. For example, the ice-vulnerable surface need not be on a helicopter, as the system 20 can be employed on any surface which needs to be maintained an anti-icing temperature.

## Claims

1. A method of supplying power to an electrothermal device (20) to maintain a surface (14) at a predetermined anti-ice temperature, the method comprising:
sensing outside air temperature with an OAT sensor (40);
detecting liquid water content with an LWC detector (50);
determining an optimum power input based on an OAT constituent and an LWC constituent; and
supplying power to the electrothermal device (30) at the determined optimum power input.

2. A method as set forth in claim 1, wherein said optimum-power-determining step is **characterized by** the absence of surface-temperature-measurement inputs.

3. A method as set forth in claim 1 or 2, wherein the OAT constituent corresponds to a power input required to maintain the surface (14) at the anti-icing temperature with the sensed outside air temperature and zero liquid water content.

4. A method as set forth in any of claims 1 to 3, wherein the LWC constituent corresponds to an additional power input required to maintain the surface (14) at the anti-ice temperature with the sensed outside air temperature and the detected liquid water content.

5. A method as set forth in any preceding claim, where the LWC and OAT constituents are together as a combined set for power determination.

6. A method as set forth in claim 5, where aircraft velocity is a third constituent to the power input determination.

7. A method as set forth in any preceding claim, wherein the anti-icing temperature is greater than 0°C, greater than 2°C, and/or greater than 4°C.

8. A method as set forth in any preceding claim, wherein the anti-icing temperature is greater than 80°C , greater than 90°C , and/or greater than 100°C.

9. A method as set forth in any preceding claim, wherein the surface (14) is on an aircraft (10).

10. A method as set forth in claim 9, wherein the aircraft (10) is a helicopter.

11. A method as set forth in claim 10, wherein the surface (14) is:
a rotary blade; and/or
part of a tail rotor (13).

12. An ice protection system (20) for performing the method set forth in any preceding claims, comprising an electrothermal device (30), an OAT sensor (40) which senses the outside air temperature, and an LWC detector (50) which detects the liquid water content.

13. A system as set forth in claim 12, further comprising an aircraft velocity sensor.

14. A system as set forth in claim 12 or 13, **characterized by** the absence of temperature sensors which sense the temperature of the surface (14).

15. A system as set forth in any of claims 12 to 14, wherein the OAT sensor (40) and/or the LWC detector (50) is mounted remote from the electrothermal device (20).
